Europäisches Patentamt

European Patent Office

Office européen des brevets

(19)

Numéro de publication: **0 432 387 A1**

# DEMANDE DE BREVET EUROPEEN

(21) Numéro de dépôt: 90118319.4

(22) Date de dépôt: 24.09.90

(51) Int. Cl.⁵ **G06K 19/08**

Le titre de l'invention a été modifié (Directives relatives à l'examen pratiqué à l'OEB, A-III, 7.3)

(30) Priorité: 29.09.89 FR 8912783

(43) Date de publication de la demande:
19.06.91 Bulletin 91/25

(84) Etats contractants désignés:
BE CH DE DK ES FR GB IT LI LU NL SE

(71) Demandeur: COMPAGNIE GENERALE D'AUTOMATISME CGA-HBS
12, rue de la Baume
F-75008 Paris(FR)

(72) Inventeur: Moisand, Jean-Claude

32, rue Baudin
F-78390 Bois d'Arcy(FR)
Inventeur: Drillon, Marc
49, rue des Prairies
F-67120 Ernolsheim Bruche(FR)
Inventeur: Bernier, Jean-Claude
11, rue de Lorraine
F-67380 Lingolsheim(FR)
Inventeur: Poix, Paul
61, rue de Lorraine
F-67380 Lingolsheim(FR)

(74) Mandataire: Weinmiller, Jürgen et al
Lennéstrasse 9 Postfach 24
W-8133 Feldafing(DE)

(54) **Carte magnétique d'autorisation d'accès ou d'achat à piste optique supplémentaire.**

(57) Carte d'autorisation d'accès ou d'achat comportant une piste magnétique codée (2), caractérisée en ce qu'elle comporte en outre, une piste optique réalisée avec un vernis transparent et incolore, ladite piste optique comportant des zones (4) dans lesquelles ledit vernis contient des molécules d'un haut polymère ayant des propriétés d'absorption d'un rayonnement dans une bande étroite de longueurs d'onde visible ou proche du visible, et de réémission d'un rayonnement dans une bande étroite de longueurs d'onde plus élevées, lesdites zones (4) formant un codage avec l'ensemble de la piste optique (3, 4) et en ce que lesdites molécules de haut polymère sont destructibles par chauffage à une température supérieure à la température ambiante mais compatible avec l'intégrité de la carte et de son codage magnétique.

# CARTE D'AUTORISATION D'ACCÈS OU D'ACHAT À PISTE MAGNÉTIQUE CODÉE, PROCÉDÉS DE FABRICATION DE CELLE-CI, ET DISPOSITIFS D'AUTORISATION D'ACCÈS OU D'ACHAT ET D'EFFACEMENT IRRÉVERSIBLE DU CODAGE OPTIQUE D'UNE TELLE CARTE.

La présente invention concerne une carte d'autorisation d'accès ou d'achat à piste magnétique codée et présentant une sécurité d'emploi très améliorée. Elle s'étend en outre à des procédés de fabrication d'une telle carte et à des dispositifs d'autorisation d'accès ou d'achat à l'aide de cette carte, ainsi qu'à un dispositif d'effacement d'un codage supplémentaire sur celle-ci.

On sait que les cartes à piste magnétique codée font l'objet de fraudes de plus en plus nombreuses, leur code pouvant être surpris à la suite de perte ou de vol ou d'imprudences de leur porteur au sujet du code, de détournements de correspondance, de frappe de leur code dans un lieu public, etc...

La présente invention a pour but de procurer une sécurité supplémentaire pour les porteurs et les exploitants de telles cartes, évitant toutes duplication, recopie ou effacement volontaire, cette sécurité étant par ailleurs non décelable par un fraudeur.

La carte selon l'invention est caractérisée en ce qu'elle comporte en outre une piste optique réalisée avec un vernis transparent et incolore, ladite piste optique comportant des zones dans lesquelles ledit vernis contient des molécules d'un haut polymère ayant des propriétés d'absorption d'un rayonnement dans une bande étroite de longueurs d'onde visible ou proche du visible, et de réémission d'un rayonnement dans une bande étroite de longueurs d'onde plus élevées, lesdites zones formant un codage avec l'ensemble de la piste optique et en ce que lesdites molécules de haut polymère sont destructibles par chauffage à une température supérieure à la température ambiante mais compatible avec l'intégrité de la carte et de son codage magnétique.

Elle répond en outre de préférence à au mois l'une des caractéristiques suivantes:

- la piste optique est déposée sur la piste magnétique.
- la rugosité moyenne de la couche de vernis transparent de la piste optique déposée sur la piste magnétique est d'environ 10 nanomètres.
- la piste optique est déposée à côté de la piste magnétique
- le haut polymère de la piste optique est la poly (1-phényl 3- mésityl) 2- pyrazoline ou la rhodamine B.

L'invention s'étend en outre à des procédés de fabrication des cartes d'autorisation d'accès ou d'achat telles que définies ci-dessus.

Selon un premier procédé, on dépose sur une carte comportant une piste magnétique, des zones discrètes réalisant un préencodage, lesdites zones étant constituées d'un vernis transparent et incolore contenant des molécules d'un haut polymère à propriétés d'absorption d'un rayonnement dans une bande étroite de longueurs d'onde visible ou proche du visible, et de réémission d'un rayonnement dans une bande étroite de longueurs d'onde plus élevées, lesdites molécules étant destructibles par chauffage à une température supérieure à la température ambiante, mais compatible avec l'intégrité de la carte, de la piste magnétique et de son codage.

Selon un deuxième procédé, on dépose sur une carte à piste magnétique sur celle-ci ou à côté de celle-ci, une piste optique uniformément chargée en molécules d'un haut polymère à propriétés d'absorption d'un rayonnement dans une bande étroite de longueurs d'onde visible ou proche du visible et de réémission du rayonnement dans une bande étroite de longueurs d'onde plus élevées, destructible par chauffage à une température supérieure à l'ambiante et compatible avec l'intégrité de la carte, de sa piste magnétique et de son codage, puis l'on détruit le haut polymère sur des zones de la piste optique de façon à y faire apparaître un codage.

L'invention s'étend encore à un dispositif d'autorisation d'accès ou d'achat au porteur d'une carte, comme définie ci-dessus, caractérisé en ce qu'il comporte un émetteur de lumière dans une bande de longueurs d'ondes englobant la zone d'absorption des molécules de haut polymère disposées dans la piste optique codée de la carte, et un récepteur de lumière dans une bande de longueurs d'onde comprenant au moins une partie de la bande de longueurs d'onde de réémission de ce haut polymère.

Elle s'étend enfin à un dispositif d'effacement du codage optique d'une carte telle que définie ci-dessus, caractérisé en ce qu'il comporte un organe de chauffage de cette carte à une température supérieure à la température de destruction du haut polymère, mais compatible avec l'intégrité de la carte et de son codage magnétique.

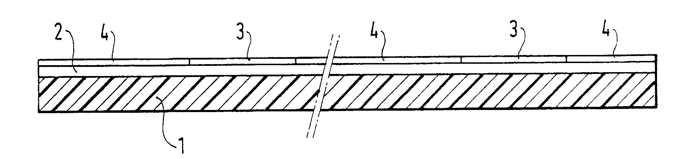

Il est décrit ci-après, à titre d'exemple et en référence à la figure unique du dessin annexé, une carte à pistes magnétique et optique codées selon l'invention en coupe par un plan perpendiculaire à sa surface à l'endroit de ses pistes magnétique et optiques superposées.

La carte comporte un support 1 en carton ou en matière plastique. Sur ce support est disposée de la manière habituelle une piste magnétique codée 2 d'épaisseur 300 à 600 nanomètres en matériau tel que des microplaquettes d'hexaferrite de strontium d'épaisseur de l'ordre de 100 nanomètres. Sur la piste magnétique est superposée une piste optique d'épaisseur du même ordre de grandeur en un vernis transparent et incolore, par exemple un vernis acrylique ou vernis butyral, additionné d'un plastifiant convenable (phtalate), et contenant quelques pourcents, par exemple 4 en poids, d'un haut polymère susceptible d'absorber un spectre étroit de lumière dans le visible ou au voisinage du visible et de réémettre le rayonnement absorbé dans un spectre étroit différent du premier et de longueurs d'onde supérieures. Par exemple, le haut polymère est constitué par la poly (1-phényl-3-mésityl) 2-pyrazoline, qui absorbe un rayonnement ultra-violet autour de 285 nanomètres et réémet un spectre étroit de lumière bleue vers 440 nanomètres.

Ce haut polymère se détruit au-dessus de 95° C environ et perd alors ses propriétés d'absorption et de réémission. On peut aussi utiliser comme haut polymère la rhodamine B, qui absorbe un rayonnement lumineux dans le bleu du spectre et réémet dans le rouge, mais présente l'inconvénient d'une température de destruction plus élevée, de l'ordre de 150° C.

La formation de la piste optique codée peut s'effectuer soit par un dépôt de zones discrètes réalisant un préencodage dès le dépôt (code à barres) à l'aide de procédés connus, tels que l'héliogravure, la flexogravure, la sérigraphie, le tamponnage, l'offset, l'injection, etc....soit par dépôt d'une couche uniforme, puis destruction du haut polymère dans des zones déterminées à l'aide de têtes lasers, de têtes thermiques, de fils chauffants, etc. On obtient une piste optique comprenant des zones 3 dans lesquelles le haut polymère a été détruit, et des zones 4 dans lesquelles il subsiste.

La couche de vernis transparent et incolore vient colmater les irrégularités de surface de la piste magnétique en procurant une surface externe de rugosité extrêmement faible (rugosité moyenne de 10 nanomètres environ). On assure ainsi un meilleur contact entre la tête de lecture et la piste, en améliorant la tenue à l'usure par abrasion des têtes magnétiques et de la piste, et une meilleure tenue de la piste magnétique sur le support, par renforcement de l'adhérence, de la dureté et de l'état superficiel de la surface externe se présentant aux têtes de lecture .

La lecture du codage optique lors d'une transaction, invisible visuellement à la lumière normale, s'effectue à l'aide d'émetteurs et de récepteurs de lumière appropriés.

L'émetteur de lumière émet dans le spectre d'absorption des molécules du haut polymère choisi. Pour la poly (1 - phényl - 3 mésityl)2 - pyrazoline, ce peut être un tube à vapeur de mercure, de spectre d'émission centré sur 285 nm dans l'ultra-violet.

Le récepteur de lumière doit avoir un spectre maximum de réception centré sur la bande de fréquence de réémission des molécules du haut polymère choisi; ce peut être pour la poly (1-phényl-3-mésityl) 2-pyrazoline une photo-diode centrée sur 440 nanomètres.

Après chaque lecture ou en fin de traitement de la carte, on peut annuler définitivement une partie ou la totalité des informations codées optiquement par le même procédé que celui défini ci-dessus pour la formation d'un codage après dépôt d'une couche optique uniforme (exposition locale ou globale à une température supérieure à la température de destruction du haut polymère).

On comprendra que l'adjonction sur une carte d'autorisation d'accès ou d'achat d'un code optique invisible au code magnétique renforce considérablement la sécurité vis-à-vis des fraudes éventuelles.

La carte d'autorisation d'accès ou d'achat selon l'invention est utilisable notamment comme ticket d'accès à utilisations successives pour transports en commun, pour cabines téléphoniques, ou comme carte d'achats à provision prédéterminée.

## Revendications

1 Carte d'autorisation d'accès ou d'achat comportant une piste magnétique codée (2), caractérisée en ce qu'elle comporte en outre, une piste optique réalisée avec un vernis transparent et incolore, ladite piste optique comportant des zones (4) dans lesquelles ledit vernis contient des molécules d'un haut polymère ayant des propriétés d'absorption d'un rayonnement dans une bande étroite de longueurs d'onde visible ou proche du visible, et de réémission d'un rayonnement dans une bande étroite de longueurs d'onde plus élevées, lesdites zones (4) formant un codage avec l'ensemble de la piste optique (3, 4) et en ce que lesdites molécules de haut polymère sont destructibles par chauffage à une température supérieure à la température ambiante mais compatible avec l'intégrité de la carte et de son codage magnétique.

2/ Carte selon la revendication 1, caractérisée en ce que la piste optique est déposée sur la piste magnétique.

3/ Carte selon la revendication 2, caractérisé en ce que la rugosité moyenne de la couche de vernis transparent et incolore de la piste optique déposée sur la piste magnétique est d'environ 10 nanomètres.

4/ Carte selon la revendication 1, caractérisée en ce que la piste optique est déposée à côté de la piste magnétique.

5/ Carte selon l'une des revendications 1 à 4, caractérisée en ce que le haut polymère est la poly (1-phényl-3-mésityl) 2-pyrazoline.

6/ Carte selon l'une des revendications 1 à 4, caractérisée en ce que le haut polymère est la rhodamine B.

7/ Procédé de fabrication d'une carte selon l'une des revendications 1 à 6, caractérisé en ce que l'on dépose sur une carte comportant une piste magnétique, des zones discrètes réalisant un préencodage, lesdites zones étant constituées d'un vernis transparent et incolore contenant des molécules d'un haut polymère à propriétés d'absorption d'un rayonnement dans une bande étroite de longueurs d'onde visible ou proche du visible, et de réémission d'un rayonnement dans une bande étroite de longueurs d'onde plus élevées, lesdites molécules étant destructibles par chauffage à une température supérieure à la température ambiante, mais compatible avec l'intégrité de la carte, de la piste magnétique et de son codage.

8/ Procédé de fabrication d'une carte selon l'une des revendications 1 à 6, caractérisé en ce que l'on dépose, sur une carte à piste magnétique codée, sur ladite piste ou à côté de celle-ci, une piste optique comprenant un vernis transparent et incolore, chargé de molécules d'un haut polymère ayant des propriétés d'absorption d'un rayonnement dans une bande étroite de longueurs d'onde visible ou proche du visible et de réémission du rayonnement dans une bande étroite de longueurs d'onde plus élevée, et destructible par chauffage à une température supérieure à l'ambiante, et compatible avec l'intégrité de la carte, de la piste magnétique et de son codage, puis en ce que l'on détruit le haut polymère sur une partie de la piste optique de façon à y faire apparaître un codage.

9/ Dispositif d'autorisation d'accès ou d'achat au porteur d'une carte selon l'une des revendications 1 à 6, caractérisé en ce qu'il comporte un émetteur de lumière dans une bande de longueurs d'ondes englobant la zone d'absorption du haut polymère disposé dans la piste optique codée de la carte, et un récepteur de lumière dans une bande de longueurs d'onde comprenant au moins une partie de la bande de longueurs d'onde de réémission de ce haut polymère.

10/ Dispositif d'effacement du codage optique d'une carte selon l'une des revendications 1 à 6, caractérisé en ce qu'il comporte un organe de chauffage de cette carte à une température supérieure à la température de destruction du haut polymère, mais compatible avec l'intégrité de la carte, de sa piste magnétique et de son codage.

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 095 822 (RAMLEY ENGINEERING)<br>* le document en entier * | 1,7-9 | G 06 K<br>19/08 |
| A | US-A-4 795 890 (GOLDMAN)<br>* le document en entier * | 1,4,7 | |
| A | EP-A-0 268 450 (LIGHT SIGNATURES)<br>* abrégé; figure 1 * | 1,4 | |
| A | US-A-4 202 491 (SUZUKI)<br>* le document en entier * | 1,7-9 | |
| A | WO-A-8 707 415 (WEST)<br>* page 5, ligne 2 - page 9, ligne 10; figures 1-3, 5 * | 1,7-9 | |
| A | US-A-4 044 231 (BECK ET AL.)<br>* revendications 1-4; figures 1-5 * | 1-2 | |
| A | DE-A-3 422 908 (L. KURZ)<br>* abrégé; figure 2 * | 1-2 | |

DOMAINES TECHNIQUES RECHERCHES (Int. Cl.5)

G 06 K

Le présent rapport de recherche a été établi pour toutes les revendications

| Lieu de la recherche | Date d'achèvement de la recherche | Examinateur |
|---|---|---|
| La Haye | 13 février 91 | GYSEN L.A.D. |